# FASCICULE DE BREVET EUROPEEN

(11) **EP 1 488 386 B1**
(45) Date de publication et mention de la délivrance du brevet: **02.01.2008**
(21) Numéro de dépôt: 03725299.6
(22) Date de dépôt: 18.03.2003
(51) Int. Cl.: G07F 7/10, G06F 1/00

(54) **PROCEDE ET DISPOSITIF DE VALIDATION AUTOMATIQUE D'UN PROGRAMME INFORMATIQUE UTILISANT DES FONCTIONS DE CRYPTOGRAPHIE**
VERFAHREN UND VORRICHTUNG ZUR AUTOMATISCHEN BEWERTUNG EINES COMPUTERPROGRAMMS MIT KRYPTOGRAFIEFUNKTIONEN
METHOD AND DEVICE FOR AUTOMATIC VALIDATION OF A COMPUTER PROGRAM USING CRYPTOGRAPHY FUNCTIONS

(30) Priorité: 26.03.2002 FR 0203743
(43) Date de publication de la demande: 22.12.2004
(73) Titulaire: OBERTHUR CARD SYSTEMS SA, 75017 Paris (FR)
(72) Inventeur: FINKELSTEIN, Vincent, F-95240 Cormeilles en Parisis (FR); ELISABETH, Fabrice, F-92000 Nanterre (FR)
(74) Mandataire: Quantin, Bruno Marie Henri
(86) Numéro de dépôt international: PCT/FR2003/000858
(87) Numéro de publication internationale: WO 2003/081546

(56) Documents cités:
- EP-A- 0 308 219
- WO-A-01/54083
- FR-A- 2 796 175
- US-A- 5 224 166
- US-A- 5 892 826

## Description

La présente invention concerne un procédé et un dispositif de validation automatique d'un programme informatique.

La présente invention vise plus précisément un procédé de validation automatique d'un programme informatique susceptible d'accéder à une mémoire sécurisée et à une mémoire non sécurisée, le programme utilisant au moins une fonction de chiffrement et au moins une fonction de déchiffrement.

L'invention trouve une utilisation avantageuse, mais non limitative, pour la personnalisation des cartes à microcircuits.

De façon connue, la personnalisation de cartes à microcircuit comporte des étapes de traitement sur des données sensibles, c'est-à-dire des données secrètes que l'on souhaite protéger de toute manipulation frauduleuse.

A titre d'exemple, un tel traitement peut consister dans les opérations successives suivantes :
- réception d'une donnée d'entrée chiffrée;
- déchiffrement de cette donnée chiffrée avec une clef secrète, le résultat de cette opération de déchiffrement étant une première donnée sensible ;
- opération logique, par exemple décalage, sur cette première donnée sensible et obtention d'une deuxième donnée sensible ; et
- chiffrement de la deuxième donnée sensible en utilisant une deuxième clef secrète.

On connaît, dans le domaine de la personnalisation des cartes à microcircuits, différentes solutions pour réaliser de tels traitements préservant, de toute manipulation frauduleuse, les données sensibles obtenues en cours de traitement.

Une première solution connue consiste à fabriquer une carte à microcircuit spécifique, appelée "carte racine", mettant en oeuvre les différentes opérations précitées.

L'utilisation d'une carte racine ainsi définie, permet en effet d'obtenir une sécurité absolue, ces données étant temporairement archivées, pour leur manipulation, dans une mémoire interne et sécurisée de la carte à microcircuit.

Malheureusement, une carte racine ne permet de réaliser que les traitements pour lesquels elle a été développée.

Ceci implique qu'il est nécessaire, pour mettre en oeuvre un nouveau traitement, de développer un masque de carte spécifique adapté à ce traitement, ce qui nécessite des coûts et une durée de développement non négligeables.

Afin de pallier cet inconvénient, l'homme du métier de la personnalisation de la carte à microcircuit, utilise parfois, et de façon connue, des plates-formes sécurisées, adaptées à réaliser différents types de traitement sur des données sensibles.

De telles plates-formes peuvent être constituées par des systèmes informatiques sécurisés ou des cartes électroniques spécifiques.

Dans ce contexte, la réalisation d'un traitement particulier comporte une première phase de spécification et de développement d'un logiciel mettant en oeuvre les différentes opérations de ce traitement, et prenant compte des caractéristiques propres de ces plates-formes sécurisées.

Au cours d'une deuxième phase, le logiciel ainsi développé est vérifié manuellement par des spécialistes de ces plates-formes, qui vérifient, qu'au cours de ce traitement particulier, aucune donnée sensible ne peut être accédée par des tiers ayant une intention frauduleuse.

Bien que plus souple d'utilisation que la carte racine, cette deuxième solution nécessite également des temps de développement relativement longs, en particulier à cause de la phase de vérification manuelle du programme par une société spécialisée.

La présente invention permet de résoudre les problèmes précités.

La présente invention a plus particulièrement pour objet un procédé de validation automatique d'un programme informatique susceptible d'accéder à une mémoire sécurisée et à une mémoire non sécurisée, le programme utilisant au moins une fonction de chiffrement et au moins une fonction de déchiffrement ; ce procédé de validation comporte une étape de vérification au cours de laquelle on vérifie :
- que toute fonction adaptée à lire des données à partir de la mémoire sécurisée et à produire des données dans la mémoire non sécurisée est une fonction de chiffrement; et
- que toute donnée produite par la fonction de déchiffrement est mémorisée dans la mémoire sécurisée.

Pour la suite de ce document, on fera la distinction entre une "mémoire sécurisée", c'est-à-dire une mémoire accessible uniquement par un programme vérificateur mettant en oeuvre ce procédé de validation, et une "mémoire non sécurisée" accessible en particulier par un utilisateur de ce programme vérificateur, ou par d'autres programmes informatiques.

Dans un premier mode de réalisation, ces mémoires sécurisée et non sécurisée sont des mémoires physiques distinctes, correspondant à des composants physiques différents.

Dans un mode de réalisation préféré, les mémoire sécurisée et non sécurisée sont des plages de registres distinctes d'un même composant physique, la gestion et le contrôle d'accès à ces mémoires étant assurés de façon logicielle connue de l'homme du métier, par exemple par des fonctions de gestion mémoire de bas niveau fournies par un système d'exploitation sécurisé.

Ce procédé de validation est particulièrement avantageux, car contrairement à la carte racine et à la plate-forme sécurisée de l'art antérieur, il permet de valider tout programme informatique utilisant des fonctions de cryptographie.

Il vérifie en particulier, que toute fonction adaptée à lire des données depuis la mémoire sécurisée et à produire des données dans la mémoire non sécurisée est une fonction de chiffrement, ce qui permet de s'assurer que seules des données chiffrées sont accessibles par l'utilisateur de ce programme vérificateur, ou par les autres programmes informatiques.

Le procédé de validation selon l'invention vérifie également que toute donnée produite par la fonction de déchiffrement, en particulier toute donnée sensible, est mémorisée dans la mémoire sécurisée.

Selon une première caractéristique, le programme informatique utilise également au moins une fonction non-cryptographique choisie parmi une fonction logique, une fonction de génération d'un nombre aléatoire, ou une fonction de contrôle d'intégrité.

Le procédé de validation permet ainsi de valider tout type de programme utilisant des fonctions de chiffrement, de déchiffrement et aussi des fonctions non-cryptographiques.

Selon une caractéristique préférée de l'invention, le programme informatique étant en code source, le procédé comporte préalablement à l'étape de vérification, une étape de compilation de ce code source en script binaire, l'étape de vérification étant effectuée sur le script binaire ainsi généré.

Ce mode de réalisation préféré permet d'atteindre un niveau de sécurité supplémentaire car il interdit toute modification frauduleuse qui pourrait être apportée sur le code source après l'étape de vérification.

Le programme informatique est par exemple un programme de génération de données sensibles.

Dans un mode préféré de réalisation, le programme informatique est un programme de transformation de données sensibles. II reçoit par exemple en entrée des premières données sensibles, par exemple des clefs sécurisées, effectue des opérations de déchiffrement et des opérations logiques sur ces premières données sensibles et fournit, après chiffrement, d'autres données sensibles, par exemple un code secret.

Selon une autre caractéristique particulièrement avantageuse, chaque fonction utilisée par le programme informatique est associée avec au moins un mode opératoire définissant au moins une règle d'accès aux mémoires sécurisée et non sécurisée, le mode opératoire étant mémorisé dans une table de vérification utilisée au cours de l'étape de vérification.

Ces modes opératoires sont utilisés par les programmeurs lors de l'étape de spécification et de développement d'un traitement particulier.

Conformément à l'invention, ces règles imposent notamment à toute fonction de déchiffrement, de mémoriser les données produites dans une mémoire sécurisée.

Dans un mode préféré de réalisation, le procédé de validation comporte en outre :
- une étape d'allocation des mémoires sécurisée et non sécurisée ;
- une étape de chargement, dans une mémoire de travail, d'un programme vérificateur du script binaire, le programme vérificateur étant adapté à mettre en oeuvre l'étape de vérification ; et
- une étape de chargement du script binaire dans la mémoire de travail.

Ces différentes étapes sont mises en oeuvre par un programme principal, qui définit ainsi l'environnement mémoire utilisé par le programme vérificateur pour la vérification du script binaire.

Il trouve ainsi une utilisation dans le domaine de la personnalisation des cartes à microcircuits, mais aussi dans des domaines variés comme par exemple les transactions électroniques dans des serveurs de télécommunications.

L'invention vise également un compilateur mettant en oeuvre un procédé de validation tel que décrit succinctement ci-dessus.

Un tel compilateur peut avantageusement être utilisé dans une chaîne logicielle de personnalisation de cartes à microcircuits.

L'invention vise également un procédé d'exécution d'un programme informatique susceptible d'accéder à une mémoire sécurisée et à une mémoire non sécurisée, le programme utilisant au moins une fonction de chiffrement et au moins une fonction de déchiffrement.

Préalablement à l'exécution de chaque fonction, le procédé d'exécution selon l'invention met en oeuvre une étape de vérification telle que brièvement décrit ci-dessus.

Selon ce procédé d'exécution, préalablement à l'exécution de chaque fonction du programme, on vérifie que cette fonction préserve, conformément à l'étape de vérification succinctement décrit ci-dessus, la sécurité des données sensibles.

Un tel procédé d'exécution est particulièrement fiable, car il interdit, toute manipulation du script binaire, entre la vérification et l'exécution d'une fonction.

Il peut bien évidemment être utilisé pour la personnalisation de cartes à microcircuits.

Plus généralement, il peut être mis en oeuvre pour la transformation ou la génération de données sensibles, par exemple dans le domaine des télécommunications, pour la génération de clefs dans un serveur de télécommunications.

Selon un autre aspect, l'invention concerne un circuit électronique intégré adapté à mettre en oeuvre un procédé de validation ou un procédé d'exécution tels que décrits succinctement ci-dessus.

Un tel circuit intégré peut par exemple être modélisé au moyen du langage VHDL connu de l'homme du métier.

Il peut aussi être mis réalisé sous forme d'un composant électronique programmable.

L'invention vise aussi une carte à microcircuit et un système informatique comportant un circuit électronique intégré tel que décrit succinctement ci-dessus.

Selon un autre aspect, l'invention vise un système d'exploitation sécurisé mettant en oeuvre un procédé de validation tel que décrit brièvement ci-dessus.

Un tel système d'exploitation peut très avantageusement être utilisé dans l'industrie des cartes à microcircuits, car il permet d'implanter les fonctions de sécurité au plus bas dans la couche logicielle de ces cartes à microcircuits, ce qui interdit quasiment tout type d'opérations frauduleuses.

Dans le domaine des cartes à microcircuit, un tel système peut d'exploitation permet également de sécuriser l'exécution d'application chargée après y compris après la mise sur le marché de ces cartes (en anglais "post-insuance").

L'invention vise également une carte à microcircuit et un système informatique comportant un tel système d'exploitation.

Corrélativement, l'invention vise un dispositif de validation d'un programme informatique susceptible d'accéder à une mémoire sécurisée et à une mémoire non sécurisée, le programme utilisant au moins une fonction de chiffrement et au moins une fonction de déchiffrement.

Le dispositif de validation comporte un programme vérificateur adapté à vérifier :
- que toute fonction adaptée à lire des données à partir de la mémoire sécurisée et à produire des données dans la mémoire non sécurisée est une fonction de chiffrement ; et
- que toute donnée produite par la fonction de déchiffrement est mémorisée dans la mémoire sécurisée.

L'invention vise aussi un système informatique d'exploitation sécurisé comportant :
- des moyens de compilation d'un programme informatique en script binaire;
- des moyens de chargement du script binaire dans une mémoire de travail ;
- des moyens d'allocation d'une mémoire sécurisée et d'une mémoire non sécurisée ; et
- un dispositif de validation tel que décrit brièvement ci-dessus.

Les avantages et caractéristiques particulières propres au compilateur, au procédé d'exécution, au système d'exploitation sécurisé, à la carte à microcircuit, au dispositif de validation et au système informatique, étant les mêmes que ceux exposés ci-dessus concernant le procédé de validation selon l'invention, ils ne seront pas rappelés ici.

D'autres aspects et avantages de la présente invention apparaîtront plus clairement à la lecture de la description de modes particuliers de réalisation qui va suivre, cette description étant donnée uniquement à titre d'exemple non limitatif et faite en référence aux dessins annexés sur lesquels :
- la figure 1 représente une table de syntaxe conforme à la présente invention ;
- la figure 2 représente une table de vérification conforme à la présente invention ;
- la figure 3 est un organigramme représentant les principales étapes d'un programme principal conforme à la présente invention ;
- la figure 4 est un organigramme représentant les principales étapes d'une procédure de vérification conforme à la présente invention ; et
- la figure 5 représente un système informatique comportant un dispositif de validation conforme à la présente invention.

Par ailleurs la description est accompagnée des annexes suivantes :
- annexe A : exemple de programme informatique susceptible d'être validé par un procédé de validation conforme à la présente invention, et exécuté par un procédé d'exécution conforme à la présente invention ;
- annexe B : code binaire obtenu après compilation du programme informatique de l'annexe A.

Un exemple de programme informatique P en code source susceptible d'être validé par un procédé de validation automatique conforme à la présente invention et exécuté par un procédé d'exécution conforme à la présente invention est donné à l'**annexe A**.

Ce programme informatique P comporte une séquence d'opérations, chaque opération mettant en oeuvre une fonction de déchiffrement, une fonction de chiffrement ou une fonction non-cryptographique.

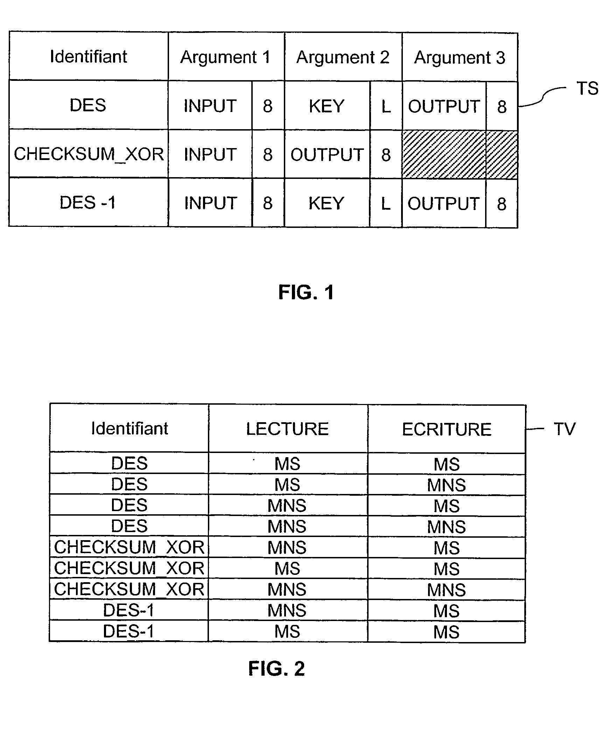

Lors du développement d'un tel programme informatique, le développeur doit, pour chaque opération, respecter une syntaxe mémorisée dans une table de syntaxe TS, dont un exemple est donné à la **figure 1**.

Plus précisément, chaque opération comporte :
- un identifiant de la fonction ;
- une liste d'arguments ; et
- un caractère représentatif de la fin de l'opération par exemple le caractère ";".

Ainsi, la première opération déclarée à la ligne a1, est une opération de déchiffrement, utilisant une fonction de déchiffrement DES-1 identifiée par l'identifiant DES-1, cette fonction utilisant trois arguments :
- INPUT, plage d'adresses de 8 octets contenant les données à déchiffrer ;
- KEY, référence à une clef cryptographique, cette référence étant mémorisée sous forme d'une chaîne de L caractères ; et
- OUTPUT, plage d'adresses de 8 octets à laquelle doit être mémorisé le résultat de la fonction de déchiffrement.

Avantageusement, dans le mode de réalisation décrit ci-dessus, le programmeur ne connaît pas la clef cryptographique, mais seulement sa référence KEY sous forme de chaîne de caractères. Ce mode de réalisation permet d'éviter toute fraude de la part du programmeur.

De même la deuxième opération déclarée à la ligne a2, est une opération de contrôle d'intégrité, utilisant une fonction de contrôle d'intégrité CHECKSUM_XOR identifiée par l'identifiant CHECKSUM_XOR, cette fonction utilisant deux arguments :
- INPUT, plage d'adresses de 8 octets contenant les données d'entrée de la fonction logique doit s'opérer ; et
- OUTPUT, adresse sur 8 octets à laquelle doit être mémorisé le résultat de la fonction logique.

Enfin, la troisième opération déclarée à la ligne a3, est une opération de chiffrement, utilisant une fonction de chiffrement DES identifiée par l'identifiant DES, cette fonction utilisant trois arguments :
- INPUT, plage d'adresses de 8 octets contenant les données à chiffrer ;
- KEY, référence à une clef cryptographique, cette référence étant mémorisée sous forme d'une chaîne de L caractères ; et
- OUTPUT, plage d'adresses sur 8 octets à laquelle doit être mémorisé le résultat de la fonction de chiffrement.

Chaque fonction est en outre associée à un mode opératoire définissant au moins une règle d'accès aux mémoires, les modes opératoires étant mémorisés dans une table de vérification telle que représentée à la **figure 2.**

La figure 2 représente une table de vérification conforme à la présente invention.

Pour chaque fonction de chiffrement, de déchiffrement et chaque fonction logique, la table de vérification TV comporte autant de lignes que de modes opératoires pour cette fonction, chaque mode opératoire définissant des règles d'accès aux mémoires sécurisée MS et non sécurisée MNS.

Par exemple, la fonction de chiffrement DES comporte quatre modes opératoires car, dans le mode de réalisation décrit ici, toute fonction de chiffrement est autorisée à lire et écrire dans les mémoires sécurisée et non sécurisée, sans contrainte particulière.

En revanche, il apparaît dans les deux dernières lignes de la table de vérification TV que la fonction de déchiffrement DES-1 ne comporte que deux modes opératoires, toute fonction de déchiffrement étant, conformément à la présente invention, autorisée à ne produire des données que dans une mémoire sécurisée MS.

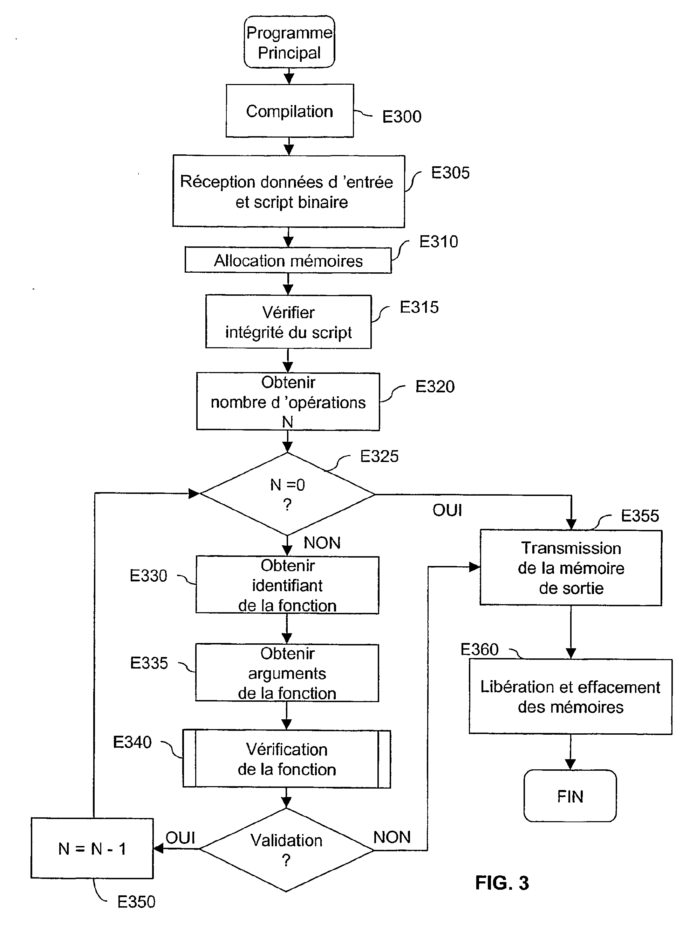

Nous allons maintenant décrire en référence à la **figure 3** un programme principal mettant en oeuvre un procédé de validation automatique et un procédé d'exécution du programme informatique P conformément à la présente invention.

Le procédé de validation comporte une étape préalable E300 de compilation du programme informatique P de l'annexe A, cette étape de compilation générant un script binaire EXE.

Le script binaire EXE résultat de cette étape de compilation va maintenant être décrit en référence à l'**annexe B.**

Afin de simplifier la description, les octets du scripts binaires EXE sont regroupés par lignes b1 à b20.

Les deux premiers octets du script EXE (ligne b1) correspondent à la taille du script binaire, soit 6C en notation hexadécimale.

L'octet suivant (ligne b2) correspond au nombre d'opérations du programme informatique P, soit 3.

Les octets regroupés aux lignes b3 à b8 sont les octets générés par la compilation de la première opération (ligne a1, annexe A).

De même, les octets regroupés aux lignes b9 à b13 sont les octets générés par la compilation de la deuxième opération (ligne a2, annexe A).

Enfin, les octets regroupés aux lignes b14 à b19 sont les octets générés par la compilation de la troisième et dernière opération (ligne a3, annexe A).

Dans chacun de ces groupes :
- la première ligne (lignes b3, b16 et b14) est constituée par un octet représentant le nombre d'octets, en notation hexadécimale, généré par la compilation de l'opération correspondante, à savoir respectivement 24, 16 et 24 pour les fonctions DES-1, CHECKSUM_XOR et DES ;
- la deuxième ligne (lignes b4, b10 et b15) est constituée par un octet généré par la compilation de l'identifiant de la fonction correspondante, à savoir respectivement 22, 53 et 21 pour les fonctions DES-1, CHECKSUM_XOR et DES ;
- la troisième ligne est constituée par un octet (lignes b5, b11 et b16) égal au nombre d'arguments de la fonction correspondante, à savoir respectivement 3, 2 et 3 pour les fonctions DES-1, CHECKSUM_XOR et DES ;
- la quatrième ligne (lignes b6, b12 et b17) est constituée par les octets générés par la compilation du premier argument de la fonction correspondante ;
- la cinquième ligne (lignes b7, b13 et b18) est constituée par les octets générés par la compilation du deuxième argument de la fonction correspondante ; et
- la sixième ligne (lignes b8 et b19) est constituée, le cas échéant, par les octets générés par la compilation du troisième argument de la fonction correspondante.

Dans le mode de réalisation décrit ici, la compilation d'un argument génère tout d'abord un premier octet représentatif de la zone mémoire dans laquelle l'opération de lecture ou d'écriture s'opérant sur cet argument doit être réalisée.

Dans l'exemple décrit ici, quatre zones mémoire sont utilisées :
- une zone d'entrée non sécurisée, IN_BUF, représentée par l'octet 01 (ligne b6) ;
- une zone de sortie non sécurisée, OUT_BUF, représentée par l'octet 02 (ligne b19) ;
- une zone sécurisée de calcul, PRIVATE , représentée par l'octet 04 (lignes b8, b12 et b13) ; et
- une zone sécurisée de mémorisation de clefs, , représentée par l'octet 05 (lignes b7 et b18).

La compilation d'un argument génère ensuite un deuxième octet représentatif de la taille de l'argument. Dans l'exemple donné ici, cette taille est soit 8 octets quand l'argument est une adresse, soit 12 octets (0C en notation hexadécimale) quand l'argument est la clef KEY constituée des 12 caractères "CIPHER.TEST1".

La compilation d'un argument génère enfin un groupe d'octets représentatif de la valeur de l'argument considéré.

Dans le mode de réalisation décrit ici, une plage d'adresses est représentée dans le programme P en utilisant la notation ZONE/DECALAGE/LONGUEUR, où :
- ZONE représente le type de la zone mémoire contenant cette plage d'adresses, ce type étant choisi parmi la zone d'entrée non sécurisée IN_BUF, la zone de sortie non sécurisée OUT_BUF, la zone sécurisée de calcul PRIVATE, et la zone sécurisée de mémorisation de clefs ;
- DECALAGE représente le décalage ("offset" en anglais) du début de cette plage d'adresses par rapport au début de la zone ; et
- LONGUEUR la taille de la plage d'adresses.

Selon cette notation, le second argument (OUTPUT=[PRIVATE/08/01]) de l'opération logique CHECKSUM_XOR (ligne a2, Annexe A), signifie que le résultat de cette opération logique, doit être mémorisé dans la zone sécurisée de calcul PRIVATE, dans une plage s'étendant sur un octet, à partir du huitième octet de cette zone.

Dans le mode de réalisation décrit ici, le script binaire se termine par une série d'octets (ligne b20) correspondant à une signature cryptographique obtenue à partir d'au moins une partie des octets constituant ce script.

L'étape E300 de compilation est suivie par une étape E305 au cours de laquelle le programme principal reçoit :
- d'une part des données d'entrée du programme informatique P, ces données d'entrée pouvant comporter des clefs sécurisées ; et
- d'autre part le script binaire EXE généré au cours de l'étape de compilation E300.

Dans le mode de réalisation décrit ici, les clefs sécurisées sont mémorisées dans la zone sécurisée de mémorisation des clefs.

L'étape de réception E305 est suivie par une étape E310 au cours de laquelle le programme principal alloue dynamiquement une mémoire sécurisée MS et une mémoire non sécurisée MNS.

Cette étape d'allocation est connue de l'homme du métier et peut être par exemple réalisée au moyen de la fonction système malloc( ).

Quoi qu'il en soit, cette étape E310 d'allocation permet d'obtenir un premier pointeur d'adresse BUFF_MNS, ce pointeur BUFF_MNS pointant sur la mémoire non sécurisée et un deuxième pointeur d'adresse BUFF_MS, pointant sur la mémoire sécurisée.

Dans le mode de réalisation décrit ici, la mémoire non sécurisée MNS ainsi allouée est subdivisée en deux zones :
- la zone d'entrée non sécurisée, IN_BUF ; et
- la zone de sortie non sécurisée, OUT_BUF.

La mémoire sécurisée MS est aussi subdivisée en deux zones :
- la zone sécurisée de calcul, PRIVATE ; et
- la zone sécurisée de mémorisation de clefs.

Au cours de la même étape E310, dans un mode préféré de réalisation, on alloue également une mémoire de travail MT repérée par le pointeur BUFF_EXE, cette mémoire de travail comportant le script binaire EXE reçu au cours de l'étape E305.

L'étape E310 d'allocation des mémoires est suivie par une étape E315 de vérification de l'intégrité du script binaire.

Cette étape E315 peut être par exemple réalisée en vérifiant la signature cryptographique du script binaire EXE, telle que décrite précédemment ne référence à la ligne b20 de l'annexe B.

Cette étape E315 optionnelle de vérification de l'intégrité du script permet de renforcer la sécurité du procédé de validation.

L'étape optionnelle E315 de vérification de l'intégrité du script est suivie par une étape E320 au cours de laquelle on obtient le nombre d'opérations N du programme informatique P, ce nombre N étant mémorisé dans un registre du même nom de la mémoire de travail MT.

Dans le mode de réalisation décrit ici, le nombre d'opérations N est le troisième octet (ligne b2) du script binaire EXE.

Lorsque l'étape optionnelle E315 de vérification de l'intégrité du script n'est pas implantée, l'étape E320 d'obtention du nombre d'opérations est consécutive à l'étape E310 d'allocation des mémoires décrite précédemment.

L'étape E320 d'obtention du nombre d'opérations N est suivie par un test E325 au cours duquel on vérifie si le contenu du registre N de la mémoire de travail MT égale 0.

Lorsque tel n'est pas le cas, le résultat du test E325 est négatif.

Ce test est alors suivi par une étape E330 au cours de laquelle on obtient, dans le script binaire, l'identifiant de fonction utilisée par la première opération du programme informatique P.

Dans l'exemple de l'annexe B, l'identifiant ainsi obtenu est 22, représentatif de la fonction DES-1 (ligne b4).

Cette étape E330 est suivie par une étape E335 au cours de laquelle on obtient, dans le script binaire, les arguments de cette fonction.

En pratique, l'étape E335 d'obtention des arguments comporte :
- une première sous-étape au cours de laquelle on cherche dans la table de syntaxe TS de la figure 1 la liste et la taille de chacun des arguments de la fonction ; et
- une deuxième sous-étape au cours de laquelle on lit le nombre d'octets correspondant dans le script binaire.

L'étape E335 d'obtention des arguments de la fonction est suivie par une étape E340 d'appel à une procédure de vérification de la fonction identifiée au cours des étapes E330 et E335.

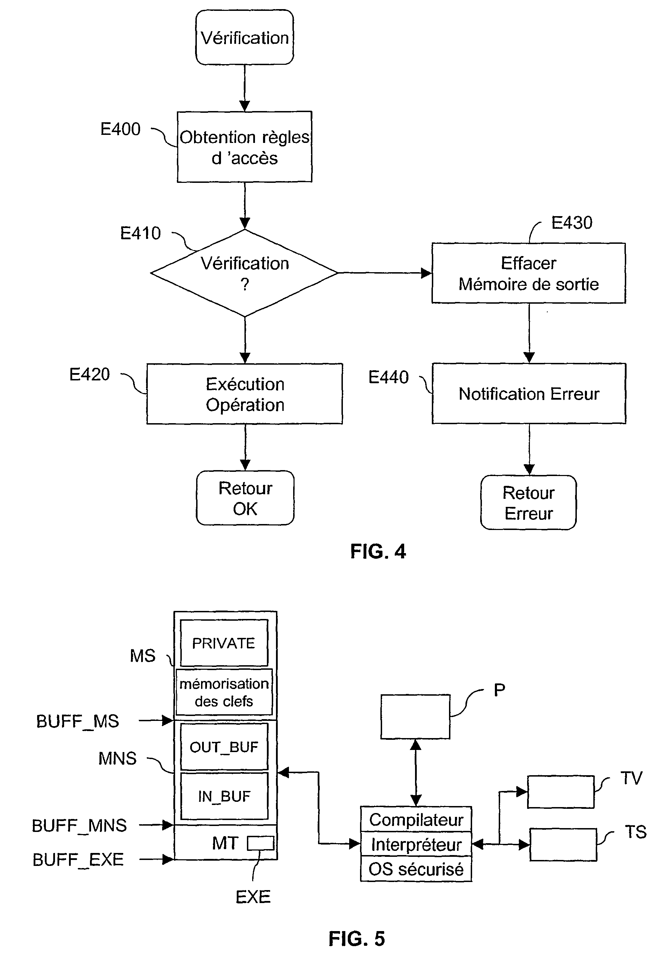

Les principales étapes E400 à E440 de la procédure de vérification vont maintenant être décrites en référence à la **figure 4**.

Au cours de la première étape E400 de la procédure de vérification, on obtient, à partir de la table de vérification de la figure 2, les règles d'accès aux mémoires sécurisée et non sécurisée, ces règles étant définies dans le mode opératoire de la fonction identifiée à l'étape E330.

L'étape E400 d'obtention des règles est suivie par un test E410 au cours duquel on vérifie si ces règles d'accès sont respectées.

En pratique, cette étape de vérification s'effectue en vérifiant :
- que toutes les opérations de lecture et d'écriture devant être, selon ces règles, effectuées dans une mémoire sécurisée, sont effectuées dans la plage d'adresse pointée par le pointeur BUFF_MS ; et
- que toutes les opérations d'écriture et de lecture devant être faites dans la mémoire non sécurisée sont effectuées dans la plage d'adresse pointée par le pointeur BUFF_MNS.

Par exemple, en parcourant les lignes b14 à b19 de l'annexe B, on identifie que la fonction DES (ligne b15) effectue :
- une opération de lecture de la plage constituée par les 9 premiers octets de la zone sécurisée de calcul PRIVATE (octet 04, ligne b17); et
- une opération d'écriture dans la plage constituée par les 10 premiers octets de la zone de sortie non sécurisée, OUT_BUF (octet 02, ligne b19), ces accès mémoires étant conformes au deuxième mode opératoire de la fonction DES, conformément à la table de vérification TV.

Lorsque toutes les règles d'accès aux mémoires sont respectées, le résultat du test E410 est positif.

Ce test est alors suivi par l'étape E420 au cours de laquelle on exécute l'opération en cours de traitement.

En revanche, si au moins l'une des règles d'accès n'est pas respectée, le résultat du test E410 est négatif.

Ce test est alors suivi par une étape E430 au cours de laquelle on efface le contenu de la zone de sortie non sécurisée OUT_BUF.

L'étape E430 d'effacement de la mémoire de sortie est suivie par une étape E440 de notification d'une erreur au programmeur du programme informatique P.

Quoi qu'il en soit, les étapes E420 et E440 terminent la procédure de vérification conforme à l'invention.

Ces étapes sont suivies par le test de validation E345 qui va maintenant être décrit de retour à la figure 3.

Au cours de ce test E345 de validation, on vérifie si la procédure de vérification décrite précédemment en référence à la figure 4 s'est terminée par une exécution de l'opération (étape E420) ou par une étape de notification d'erreur (étape E440).

Lorsque la procédure de vérification s'est terminée normalement, c'est-à-dire par l'étape E420 d'exécution d'opération, le résultat du test E345 est positif.

Ce test est alors suivi par une étape E350 au cours de laquelle on décrémente le contenu du registre N d'une unité.

L'étape E350 est suivie par le test E325 déjà décrit, test au cours duquel on vérifie si le registre N contient la valeur 0.

Lorsque le résultat de ce test est négatif, on exécute l'étape E330 déjà décrite au cours de laquelle on lit dans le script binaire EXE l'identifiant de la fonction constituant la deuxième opération du programme informatique P.

Les étapes E325 à E350 constituent ainsi une boucle au cours de laquelle, si le programme informatique P respecte l'ensemble des règles d'accès aux mémoires, toutes les opérations de ce programme sont validées et exécutées.

En revanche, lorsque la procédure de vérification est terminée par une notification d'erreur, le résultat du test E345 est négatif.

Ce test est alors suivi par l'étape E355 décrite ci-après.

Lorsque toutes les opérations du programme informatique P ont été validées par la boucle constituée par les étapes E325 à E350, le résultat du test E325 est positif.

Dans ce cas, le test E325 est suivi par une étape E355 au cours de laquelle on transmet le contenu de zone de sortie OUT_BUF, soit à l'utilisateur du programme principal, soit à un autre programme informatique de traitement des données de sortie.

L'étape E355 est suivie par une étape E360 de libération et d'effacement des mémoires allouées à l'étape E310.

Cette étape E310 termine le programme principal conforme à la présente invention.

La **figure 5** représente de façon schématique un système informatique comportant un dispositif de validation conforme à la présente invention.

Ce système informatique comporte tout d'abord un compilateur permettant de générer, à partir d'un programme informatique P en code source, un script binaire EXE tel que défini précédemment.

Le système informatique comporte également un système d'exploitation (en anglais, Operating System) sécurisé. Ce système d'exploitation sécurisé comporte des moyens d'allocation d'une mémoire sécurisée MS et d'une mémoire non sécurisée MNS.

Ces moyens d'allocation sont en pratique, dans un mode de réalisation préféré, des fonctions logicielles connues de l'homme du métier, par exemple la fonction malloc( ). Cette fonction d'allocation retourne, de façon connue, un pointeur d'adresse délimitant le début des plages d'adresse des mémoires sécurisée MS et non sécurisée MNS.

Dans l'exemple de la figure 5, les pointeurs d'adresse des mémoires sécurisée MS et non sécurisée MNS sont respectivement BUFF_MS et BUFF_MNS.

Dans un mode préféré de réalisation, le script binaire EXE est contenu dans une mémoire de travail MT allouée par les moyens d'allocation précités et repérée par le pointeur d'adresse BUFF_EXE.

Dans le mode de réalisation décrit ici, le script binaire EXE est en pratique chargé dans la mémoire de travail par des moyens de chargement du système informatique, par exemple un bus PCI.

Dans un autre mode de réalisation, le script binaire EXE est mémorisé dans une mémoire non volatile et chargé au moment de sa validation.

Le système informatique comporte ainsi un dispositif de validation comportant une programme vérificateur adapté à vérifier la validité du script binaire EXE.

D'une façon générale le programme vérificateur du système informatique est adapté à mettre en oeuvre le procédé de validation et le procédé d'exécution décrits précédemment en référence aux figures 3 et 4.

Plus précisément, le programme vérificateur est adapté à vérifier que toute fonction adaptée à lire des données à partir de la mémoire sécurisée MS et à produire des données dans la mémoire non sécurisée MNS est une fonction de chiffrement.

Il est également adapté à vérifier que toute donnée produite par une fonction de déchiffrement est mémorisée dans la mémoire sécurisée MS.

Le programme vérificateur est en particulier adapté à parcourir le script binaire EXE mémorisé dans la mémoire de travail MT, à repérer les instructions correspondant aux identifiants et aux arguments des fonctions de chiffrement, de déchiffrement et logiques après compilation.

Cette étape de repérage s'effectue en comparant les données hexadécimales du script binaire EXE avec les informations contenues dans la table de syntaxe TS décrite précédemment en référence à la figure 1.

Une fois ces identifiants et arguments de fonction repérés, le programme vérificateur du système informatique est adapté à vérifier que les règles d'accès mémorisées dans la table de vérification TV, décrite précédemment en référence à la figure 2, sont respectées.

Pour ce faire, et pour chaque opération de lecture ou d'écriture dans une mémoire, il repère dans le script binaire EXE l'adresse mémoire à laquelle cette opération doit être réalisée.

Ensuite, il détermine si cette opération est prévue pour avoir lieu dans la mémoire sécurisée MS ou dans la mémoire non sécurisée MNS, ceci en comparant l'adresse prévue pour l'opération avec les valeurs des pointeurs d'adresse BUFF_MS et BUFF_MNS.

Une fois que le type de ces mémoires est identifié, le programme vérificateur du système informatique vérifie que l'opération d'écriture ou de lecture est conforme aux règles d'accès pour le type de fonction en cours de traitement.

Dans un autre mode de réalisation, le procédé de validation est implanté au niveau du système d'exploitation sécurisé. Un tel système d'exploitation peut avantageusement être utilisé dans une carte à microcircuit.

### ANNEXES

### ANNEXE A

| | |
|---|---|
| /*a1*/ | DES -1 (INPUT = [IN_BUF/00/08], KEY="CIPHER.TEST1 ", OUTPUT = [PRIVATE/00/08]); |
| /*a2*/ | CHECKSUM_XOR (INPUT = [PRIVATE/00/08], OUTPUT = [PRIVATE/08/01]); |
| /*a3*/ | DES (INPUT = [PRIVATE/00/09], KEY="CIPHER.TEST1", OUTPUT = [OUT_BUF/00/10]); |

### ANNEXE B

| | | |
|---|---|---|
| /*b1*/ 006C | | /* taille du script */ |
| /*b2*/ 03 | | /* nombre d'opérations*/ |
| | | |
| /*b3*/ 24 | | /* taille instructions DES -1 */ |
| /*b4*/ 22 | | /* identifiant instruction DES -1 */ |
| /*b5*/ 03 | | /* nombre d'arguments */ |
| /*b6*/ 01 | 08 0000000000000008 | /* INPUT */ |
| /*b7*/ 05 | 0C 4349504845522E5445535431 | /* KEY */ |
| /*b8*/ 04 | 08 0000000000000008 | /* OUTPUT */ |
| | | |
| /*b9*/ 16 | | /* taille instructions CHECKSUM_XOR */ |
| /*b10*/ 53 | | /* identifiant instruction CHECKSUM_XOR */ |
| /*b11*/ 02 | | /* nombre d'arguments */ |
| /*b12*/04 | 08 0000000000000008 | /* INPUT*/ |
| /*b13*/ 04 | 08 0000000800000001 | /* OUTPUT */ |
| | | |
| /*b14*/ 24 | | /* taille instructions DES*/ |
| /*b15*/ 21 | | /* identifiant instruction DES */ |
| /*b16*/ 03 | | /* nombre d'arguments */ |
| /*b17*/ 04 | 08 0000000000000009 | /* INPUT */ |
| /*b18*/ 05 | 0C 4349504845522E5445535431 | /* KEY */ |
| /*b19*/02 | 08 0000000000000010 | /* OUTPUT */ |
| | | |
| /*b20*/ 1425283678895422 | | /* signature cryptographique */ |

## Revendications

1. Procédé de validation automatique d'un programme informatique susceptible d'accéder à une mémoire sécurisée (MS) et à une mémoire non sécurisée (MNS), le programme utilisant au moins une fonction de chiffrement (DES) et au moins une fonction de déchiffrement (DES-1), **caractérisé en ce qu'**il comporte une étape de vérification (E340) au cours de laquelle on vérifie :
- que toute fonction adaptée à lire des données à partir de ladite mémoire sécurisée (MS) et à produire des données dans ladite mémoire non sécurisée (MNS) est une fonction de chiffrement ; et
- que toute donnée produite par ladite fonction de déchiffrement est mémorisée dans ladite mémoire sécurisée (MS).

2. Procédé de validation selon la revendication 1, **caractérisé en ce que** ledit programme utilise en outre au moins une fonction non-cryptographique, ladite fonction non-cryptographique étant choisie parmi une fonction logique, une fonction de génération d'un nombre aléatoire, ou une fonction de contrôle d'intégrité.

3. Procédé de validation selon la revendication 2, **caractérisé en ce que** toute donnée produite par ladite fonction non-cryptographique à partir d'une donnée lue dans ladite mémoire sécurisée (MS) est mémorisée dans ladite mémoire sécurisée (MS).

4. Procédé de validation selon l'une quelconque des revendications 1 à 3, **caractérisé en ce que**, le programme informatique étant en code source, le procédé comporte, préalablement à ladite étape de vérification (E340), une étape de compilation (E300) dudit code source en script binaire (EXE), ladite étape de vérification (E340) étant effectuée sur le script binaire (EXE) ainsi généré.

5. Procédé de validation selon l'une quelconque des revendications 1 à 4, **caractérisé en ce que** ledit programme informatique est un programme de génération de données sensibles.

6. Procédé de validation selon l'une quelconque des revendications 1 à 5, **caractérisé en ce que** ledit programme informatique est un programme de transformation de données sensibles.

7. Procédé de validation selon l'une quelconque des revendications 1 à 6, **caractérisé en ce que** chaque fonction utilisée par ledit programme informatique est associée avec au moins un mode opératoire définissant au moins une règle d'accès auxdites mémoires, le mode opératoire étant mémorisé dans une table de vérification (TV) utilisée au cours de ladite étape de vérification (E340).

8. Procédé de validation selon la revendication 7, **caractérisé en ce qu'**il comporte en outre :
- une étape d'allocation (E310) desdites mémoires sécurisée (MS) et non sécurisée (MNS);
- une étape de chargement, dans une mémoire de travail, d'un programme vérificateur dudit script binaire (EXE), ledit programme vérificateur étant adapté à mettre en oeuvre ladite étape de vérification (E340) ; et
- une étape de chargement (E305) dudit script binaire (EXE) dans ladite mémoire de travail.

9. Compilateur **caractérisé en ce qu'**il est adapté à mettre en oeuvre un procédé de validation conforme à l'une quelconque des revendications 1 à 7.

10. Procédé d'exécution d'un programme informatique susceptible d'accéder à une mémoire sécurisée (MS) et à une mémoire non sécurisée (MNS), le programme utilisant au moins une fonction de chiffrement (DES) et au moins une fonction de déchiffrement (DES-1), **caractérisé en ce que**, préalablement à l'exécution (E420) de chaque fonction dudit programme, on met en oeuvre une étape de vérification (E340) conforme à l'une quelconque des revendications 1 à 8.

11. Utilisation du procédé d'exécution selon la revendication 10 pour la transformation ou la génération de données sensibles.

12. Utilisation du procédé d'exécution selon la revendication 10 pour la personnalisation de cartes à microcircuits.

13. Circuit électronique intégré **caractérisé en ce qu'**il est adapté à mettre en oeuvre un procédé de validation selon l'une quelconque des revendications 1 à 8 ou un procédé d'exécution conforme à la revendication 10.

14. Carte à microcircuit **caractérisée en ce qu'**elle comporte circuit électronique intégré conforme à la revendication 13.

15. Système informatique **caractérisé en ce qu'**il comporte un circuit électronique intégré conforme à la revendication 13.

16. Système d'exploitation sécurisé adapté à mettre en oeuvre un procédé de validation conforme à l'une quelconque des revendications 1 à 8.

17. Carte à microcircuit **caractérisée en ce qu'**elle comporte un système d'exploitation selon la revendication 16.

18. Système informatique **caractérisé en ce qu'**il comporte un système d'exploitation selon la revendication 16.

19. Dispositif de validation d'un programme informatique susceptible d'accéder à une mémoire sécurisée (MS) et à une mémoire non sécurisée (MNS), le programme utilisant au moins une fonction de chiffrement (DES) et au moins une fonction de déchiffrement (DES-1), **caractérisé en ce qu'**il comporte un programme vérificateur adapté à vérifier :
- que toute fonction adaptée à lire des données à partir de ladite mémoire sécurisée (MS) et à produire des données dans ladite mémoire non sécurisée (MNS) est une fonction de chiffrement ; et
- que toute donnée produite par ladite fonction de déchiffrement est mémorisée dans ladite mémoire sécurisée (MS).

20. Dispositif de validation selon la revendication 19, ledit **caractérisé en ce que** le programme vérificateur est adapté à effectuer lesdites vérifications à partir d'un script binaire (EXE) obtenu par compilation dudit programme informatique.

21. Système informatique comportant un système d'exploitation sécurisé **caractérisé en ce qu'**il comporte :
- des moyens de compilation d'un programme informatique en script binaire (EXE) ;
- des moyens de chargement dudit script binaire (EXE) dans une mémoire de travail ;
- des moyens d'allocation d'une mémoire sécurisée (MS) et d'une mémoire non sécurisée (MNS) ;
- un dispositif de validation conforme à la revendication 19.

## Claims

1. Method of automatic validation of a computer program able to access secure memory (MS) and non-secure memory (MNS), the program using at least one encryption function (DES) and at least one decryption function (DES-1), **characterized in that** it comprises a verification step (E340) which verifies that:
- any function adapted to read data from said secure memory (MS) and to produce data in said non-secure memory (MNS) is an encryption function; and
- any data produced by said decryption function is stored in said secure memory (MS).

2. Validation method according to claim 1, **characterized in that** said program also uses at least one non-cryptographic function, said non-cryptographic function being chosen from a logic function, a random number generation function and an integrity check function.

3. Validation method according to claim 2, **characterized in that** any data produced by said non-cryptographic function from data read in said secure memory (MS) is stored in said secure memory (MS).

4. Validation method according to any of claims 1 to 3, **characterized in that**, the computer program being in source code, the method comprises, before said verification step (E340), a step (E300) of compilation of said source code into binary script (EXE), said verification step (E340) being effected on the binary script (EXE) generated in this way.

5. Validation method according to any of claims 1 to 4, **characterized in that** said computer program is a sensitive data generation program.

6. Validation method according to any of claims 1 to 5, **characterized in that** said computer program is a sensitive data transformation program.

7. Validation method according to any of claims 1 to 6, **characterized in that** each function used by said computer program is associated with at least one operating mode that defines at least one rule governing access to said memories, said operating mode being stored in a verification table (TV) used during said verification step (E340).

8. Validation method according to claim 7, **characterized in that** it further comprises:
- a step (E310) of allocation of said secure memory (MS) and said non-secure memory (MNS);
- a step of loading into a working memory a verifier program for said binary script (EXE), said verifier program being adapted to implement said verification step (E340); and
- a step (E305) of loading said binary script (EXE) into said working memory.

9. Compiler **characterized in that** it is adapted to implement a validation method according to any of claims 1 to 7.

10. Method of executing a computer program adapted to access secure memory (MS) and non-secure memory (MNS), the program using at least one encryption function (DES) and at least one decryption function (DES-1), **characterized in that** a verification step (E340) conforming to any of claims 1 to 8 is executed before the execution (E420) of each function of said program.

11. Use of the execution method according to claim 10 to transform or generate sensitive data.

12. Use of the execution method according to claim 10 to customize microcircuit cards.

13. Integrated electronic circuit **characterized in that** it is adapted to implement a validation method according to any of claims 1 to 8 or an execution method according to claim 10.

14. Microcircuit card **characterized in that** it comprises an integrated electronic circuit according to claim 13.

15. Computer system **characterized in that** it comprises an electronic integrated circuit according to claim 13.

16. Secure operating system adapted to implement a validation method according to any of claims 1 to 8.

17. Microcircuit card **characterized in that** it comprises an operating system according to claim 16.

18. Computer system **characterized in that** it comprises an operating system according to claim 16.

19. Device for validating a computer program adapted to access secure memory (MS) and non-secure memory (MNS), the program using at least one encryption function (DES) and at least one decryption function (DES-1), **characterized in that** it comprises a verifier program adapted to verify that:
- any function adapted to read data from said secure memory (MS) and to produce data in said non-secure memory (MNS) is an encryption function; and
- any data produced by said decryption function is stored in said secure memory (MS).

20. Validation device according to claim 19, **characterized in that** the verifier program is adapted to effect said verifications on the basis of a binary script (EXE) obtained by compilation of said computer program.

21. Computer system comprising a secure operating system **characterized in that** it comprises:
- means for compiling a computer program in binary script (EXE) ;
- means for loading said binary script (EXE) into a working memory;
- means for allocating secure memory (MS) and non-secure memory (MNS); and
- a validation device according to claim 19.

## Patentansprüche

1. Verfahren zum automatischen Validieren eines Datenverarbeitungsprogramms, das auf einen gesicherten Speicher (MS) und auf einen nicht gesicherten Speicher (MNS) zugreifen kann, wobei das Programm wenigstens eine Chiffrierungsfunktion (DES) und wenigstens eine Dechiffrierungsfunktion (DES-1) verwendet, **dadurch gekennzeichnet, dass** es einen Verifizierungsschritt (E340) enthält, in dessen Verlauf verifiziert wird:
- dass jede Funktion, die ausgelegt ist, um Daten aus dem gesicherten Speicher (MS) zu lesen und Daten in dem nicht gesicherten Speicher (MNS) zu erzeugen, eine Chiffrierungsfunktion ist; und
- dass alle Daten, die durch die Dechiffrierungsfunktion erzeugt werden, in dem gesicherten Speicher (MS) gespeichert werden.

2. Validierungsverfahren nach Anspruch 1, **dadurch gekennzeichnet, dass** das Programm außerdem wenigstens eine nicht kryptographische Funktion verwendet, wobei die nicht kryptographische Funktion aus einer logischen Funktion, einer Funktion zum Erzeugen einer Zufallszahl oder einer Integritätskontrollfunktion ausgewählt ist.

3. Validierungsverfahren nach Anspruch 2, **dadurch gekennzeichnet, dass** alle Daten, die durch die nicht kryptographische Funktion aus Daten erzeugt werden, die in dem gesicherten Speicher (MS) gelesen werden, in den gesicherten Speicher (MS) gespeichert werden.

4. Validierungsverfahren nach einem der Ansprüche 1 bis 3, **dadurch gekennzeichnet, dass** dann, wenn das Datenverarbeitungsprogramm im Quellcode vorliegt, das Verfahren vor dem Verifizierungsschritt (E340) einen Schritt (E300) zum Kompilieren des Quellcodes in Binärskript (EXE) umfasst, wobei der Verifizierungsschritt (E340) an dem somit erzeugten Binärskript (EXE) ausgeführt wird.

5. Validierungsverfahren nach einem der Ansprüche 1 bis 4, **dadurch gekennzeichnet, dass** das Datenverarbeitungsprogramm ein Programm zum Erzeugen sensibler Daten ist.

6. Validierungsverfahren nach einem der Ansprüche 1 bis 5, **dadurch gekennzeichnet, dass** das Datenverarbeitungsprogramm ein Programm zum Transformieren sensibler Daten ist.

7. Validierungsverfahren nach einem der Ansprüche 1 bis 6, **dadurch gekennzeichnet, dass** jede Funktion, die von dem Datenverarbeitungsprogramm verwendet wird, wenigstens einer Betriebsart zugeordnet ist, die wenigstens eine Regel für den Zugriff auf die Speicher definiert, wobei die Betriebsart in einer Verifizierungstabelle (TV) gespeichert ist, die während des Verifizierungsschrittes (E340) verwendet wird.

8. Validierungsverfahren nach Anspruch 7, **dadurch gekennzeichnet, dass** es außerdem umfasst:
- einen Schritt (E310) zum Zuweisen des gesicherten Speichers (MS) und des nicht gesicherten Speichers (MNS);
- einen Schritt des Ladens eines Programms zum Verifizieren des Binärskripts (EXE) in einen Arbeitsspeicher, wobei das Verifizierungsprogramm ausgelegt ist, um den Verifizierungsschritt (E340) auszuführen; und
- einen Schritt (E305) zum Laden des Binärskripts (EXE) in den Arbeitsspeicher.

9. Kompilierer, **dadurch gekennzeichnet, dass** er ausgelegt ist, um ein Validierungsverfahren nach einem der Ansprüche 1 bis 7 auszuführen.

10. Verfahren zum Ausführen eines Datenverarbeitungsprogramms, das auf einen gesicherten Speicher (MS) und auf einen nicht gesicherten Speicher (MNS) zugreifen kann, wobei das Programm wenigstens eine Chiffrierungsfunktion (DES) und wenigstens eine Dechiffrierungsfunktion (DES-1) verwendet, **dadurch gekennzeichnet, dass** vor der Ausführung (E420) jeder Funktion des Programms ein Verifizierungsschritt (E340) nach einem der Ansprüche 1 bis 8 ausgeführt wird.

11. Verwendung des Ausführungsverfahrens nach Anspruch 10 für die Transformation oder die Erzeugung sensibler Daten.

12. Verwendung des Ausführungsprogramms nach Anspruch 10 für die Personalisierung von Mikroschaltungskarten.

13. Integrierte elektronische Schaltung, **dadurch gekennzeichnet, dass** sie ausgelegt ist, um ein Validierungsverfahren nach einem der Ansprüche 1 bis 8 oder ein Ausführungsverfahren nach Anspruch 10 auszuführen.

14. Mikroschaltungskarte, **dadurch gekennzeichnet, dass** sie eine integrierte elektronische Schaltung nach Anspruch 13 enthält.

15. Datenverarbeitungssystem, **dadurch gekennzeichnet, dass** es eine integrierte elektronische Schaltung nach Anspruch 13 enthält.

16. Gesichertes Betriebssystem, das ausgelegt ist, um ein Validierungsverfahren nach einem der Ansprüche 1 bis 8 auszuführen.

17. Mikroschaltungskarte, **dadurch gekennzeichnet, dass** sie ein Betriebssystem nach Anspruch 16 enthält.

18. Datenverarbeitungssystem, **dadurch gekennzeichnet, dass** es ein Betriebssystem nach Anspruch 16 enthält.

19. Vorrichtung zum Validieren eines Datenverarbeitungsprogramms, das auf einen gesicherten Speicher (MS) und auf einen nicht gesicherten Speicher (MNS) zugreifen kann, wobei das Programm wenigstens eine Chiffrierungsfunktion (DES) und wenigstens eine Dechiffrierungsfunktion (DES-1) verwendet, **dadurch gekennzeichnet, dass** es ein Verifizierungsprogramm enthält, das ausgelegt ist, um zu verifizieren:
- dass jede Funktion, die ausgelegt ist, um die Daten aus dem gesicherten Speicher (MS) zu lesen und um in dem nicht gesicherten Speicher (MNS) Daten zu erzeugen, eine Chiffrierungsfunktion ist; und
- dass alle Daten, die durch die Dechiffrierungsfunktion erzeugt werden, in dem gesicherten Speicher (MS) gespeichert werden.

20. Validierungsvorrichtung nach Anspruch 19, **dadurch gekennzeichnet, dass** das Verifizierungsprogramm ausgelegt ist, um die Verifizierungen ausgehend von einem Binärskript (EXE) auszuführen, das durch Kompilierung des Datenverarbeitungsprogramms erhalten wird.

21. Datenverarbeitungssystem, das ein gesichertes Betriebssystem enthält, **dadurch gekennzeichnet, dass** es umfasst:
- Mittel zum Kompilieren eines Datenverarbeitungsprogramms in Binärskript (EXE);
- Mittel zum Laden des Binärskripts (EXE) in einen Arbeitsspeicher;
- Mittel zum Zuweisen eines gesicherten Speichers (MS) und eines nicht gesicherten Speichers (MNS);
- eine Validierungsvorrichtung nach Anspruch 19.
